# EUROPÄISCHE PATENTANMELDUNG

(11) **EP 2 372 852 A2**
(43) Veröffentlichungstag der Anmeldung: **05.10.2011**
(21) Anmeldenummer: 11171824.3
(22) Anmeldetag: 24.03.2004
(51) Int. Cl.: H02B 1/30

(54) **Haltevorrichtung für einen Außenanbau an einem Zähler- oder/und Verteilerschrank**

(30) Priorität: 24.03.2003 DE 10313838; 24.09.2003 DE 10344456
(62) Teilanmeldung aus: 04006998.1
(71) Anmelder: Hager Electro GmbH & Co. KG, 66440 Blieskastel (DE)
(72) Erfinder: Amendola, Ettore, 66131 Saarbrücken (DE); Hein, Peter, 66386 St. Ingbert (DE); Hinschberger, Peter, 66131 Saarbrücken (DE); Leidinger, Michael, 66265 Heusweiler (DE); Neufing, Andreas, 66352 Großrosseln (DE); Noll, Jürgen, 66440 Blieskastel (DE); Vanesson, Damien, 57520 Großblittersdorf (FR)
(74) Vertreter: Bernhardt, Reinold

(57) **Zusammenfassung**

Die Erfindung betrifft eine Haltevorrichtung für einen Außenanbau (5) an einem Zähler- und/oder Verteilerschrank (1), insbesondere für einen Anbau zur Bildung eines Kabelkanals (4), mit Einrichtungen zur Befestigung des Außenanbaus an einer Schrankseitenwand (2). Gemäß der Erfindung sind die Befestigungseinrichtungen zur Anbringung des Außenanbaus (5) an der Schrankseitenwand (2) in unterschiedlichen Abständen zur Schrankrückwand vorgesehen. Damit ist eine Anpassung der Position des Außenanbaus an die Dicke einer nach der Installation des Schranks an einer Wand auf die Wand aufgebrachten Putzanschlussschicht möglich.

## Beschreibung

Die Erfindung betrifft eine Haltevorrichtung für einen Außenanbau an einem Zähler-oder/und Verteilerschrank, insbesondere für einen Anbau zur Bildung eines Kabelkanals, mit Einrichtungen zur Befestigung des Außenanbaus an einer Schrankseitenwand.

Der Erfindung liegt die Aufgabe zugrunde, für einen Zähler- und/oder Verteilerschrank weitere Nutzungsmöglichkeiten zu erschließen.

Die diese Aufgabe lösende Haltevorrichtung ist dadurch gekennzeichnet, dass die Befestigungseinrichtungen zur Anbringung des Außenanbaus an der Schrankseitenwand in unterschiedlichen Abständen zur Schrankrückwand vorgesehen sind.

Vorteilhaft erlaubt es eine solche Haltevorrichtung, die Position des Außenanbaus auf der Schrankseitenwand an die Dicke einer nach Installation des Schranks an einer Rohbauwand auf die Wand aufgebrachte Anschlussputzschicht anzupassen.

Ein Zähler- und/oder Verteilerschrank ist durch einen Außenanbau gekennzeichnet, der einen am Schrank außen entlang der Schrankwand verlegten Kabelkanal und/oder am Schrank außen angebrachte Einrichtungen zur Stromverteilung oder/und Stromentnahme oder/und Vorkehrungen für die Anbringung eines solchen Kabelkanals bzw. solcher Einrichtungen umfasst.

Ein solcher unmittelbar zur Stromentnahme nutzbarer Verteilerschrank erspart Kabelverlegungen am installationsort. Bei Installation des Schranks, z.B. in einer Garage, bedarf es im Garagenraum keines Einbaus weiterer Steckdosen. Gegebenenfalls könnte die Kabelführung vom Schrank weg im Installationsraum unter Einsparung von Unterputzverlegungen weitergeführt werden.

In einer Ausführungsform ist am Schrank ein nach außen geschlossener, zu einer Kabelaustrittsöffnung in der Schrankwand öffnender Kabelkanal angebracht, wobei dieser Kabelkanal vorzugsweise mit einer Kabelaustrittsöffnung an der Schrankoberseite in Verbindung steht. Zum Beispiel kann in einen Kabelkanalteil, der entlang einer vertikalen Seitenwand verläuft, eine Steckdose eingebaut sein. Der Zähler- und Verteilerschrank mit dem nach außen bis zur Steckdose abgedeckten Kabelkanal erfüllt alle an einen solchen Schrank zu stellenden Schutzanforderungen.

In weiterer vorteilhafter Ausgestaltung weist der Schrank vertikale und horizontale Seitenwandteile verbindende Eckenteile auf und der Kabelkanal ist an solchen Eckenteilen angebracht. Die Eckenteile können mit Sitzen und Stecköffnungen für den Kabelkanal bzw. am Kabelkanal angebrachte Steckverbindungselemente versehen sein.

In der bevorzugten Ausführungsform umfasst der Kabelkanal ein U-Profil und eine an der offenen Seite des U-Profils anbringbare Abdeckung. Zweckmäßig lässt sich die Abdeckung auf das U-Profil aufstecken und die Abdeckung dient als Halter für in den Kabelkanal eingebaute Steckdosen.

Der Kabelkanal kann am Schrank, von der Vorderseite aus gesehen, rahmenartig als Teilrahmen oder geschlossener Rahmen umlaufen, wobei sich der Kabelkanal z.B. entlang der oberen Seitenwand des Schranks und wenigstens einer der vertikalen Seitenwände erstreckt.

Insbesondere in den seitlichen Teilen des Kabelkanals können Steckdosen oder/und Verteilereinrichtungen eingebaut sein.

Der Kabelkanal lässt sich durch ein zum Schrank und der Insfallationswand offenes Winkelteil bilden, wobei sich ein solches Winkelteil insbesondere für die Bildung eines Kabelkanalabschnitts an der Schrankoberseite eignet.

An den Vertikalseiten des Schranks nahe den Ecken kann jeweils eine Ausnehmung für die Aufnahme eines Verbindungsstücks für die Verbindung des Schranks mit dem Kabelkanal gebildet sein, wobei es sich bei dem Verbindungsstück um ein, vorzugsweise in der Ausnehmung einrastendes, Steckverbindungsstück handelt. An dem Verbindungsstück lassen sich einen Endrand der Kabelkanalwand eines seitlichen Kabelkanals hintergreifende Krallen bilden.

Das obengenannte Winkelteil lässt sich am Rand durch Halter mit einem im Abstand von der Rückwandebene des Schranks angeordneten, nach oben vorstehenden Halteschenkel befestigen, wobei an dem Halteschenkel eine zur Befestigung an der Installationswand vorgesehene Verlängerung gelenkig angebracht sein kann.

Die obengenannten unterschiedlichen Abstände können kontinuierlich oder in kleinen Stufen einstellbar sein und die Befestigungseinrichtungen Rast- oder/und Schraubverbindungseinrichtungen umfassen, wobei den unterschiedlichen Abständen von der Rückwand unterschiedliche Positionen einer Rastnase in einer Rastzahnung oder unterschiedliche Positionen einer Verbindungsschraube in einem Langloch entsprechen. Eine solche Zahnung oder ein solches Langloch kann am Schrank oder/und Außenanbau gebildet sein.

In einer bevorzugten Ausführungsform der Erfindung weisen die Befestigungseinrichtungen ein in unterschiedlichen Positionen an dem Schrank oder dem Außenanbau anbringbares, vorzugsweise separates, Verbindungsstück auf, das ebenfalls mit der genannten Zahnung oder dem Langloch vorgesehen sein kann.

Vorzugsweise ist das Verbindungsstück als Winkel ausgebildet und ein Schenkel mit dem Schrank und der andere Winkelschenkel mit dem Außenanbau verbindbar oder verbunden.

In weiterer Ausgestaltung der Erfindung weist der eine Schenkel einen vorstehenden Zapfen zum Eingriff in Öffnungen in der Schrankwand auf, wobei es sich bei den Öffnungen vorzugsweise um Langlöcher mit einer Aufweitung, in welche ein hinterschnittener Kopf der Zapfen einführbar ist, handelt.

Insbesondere kann der Kopf mit an der Rastzahnung einrastenden Nasen versehen sein, welche an einem zur Anordnung innerhalb des Schranks angeordneten Halteblock gebildet ist. Vorzugsweise umfasst die Rastzahnung eine einseitig offene Nut mit an den Nutenwänden einander gegenüberliegenden Zahnreihen.

In weiterer Ausgestaltung der Erfindung können Einrichtungen zur Blockierung der Rastnasen in der Rastzahnung vorgesehen sein, die eine ungewollte Lösung der Rastverbindung verhindern.

Der genannte Zapfen weist Vorteilhaft einen Längsschlitz und ggf. eine Längsbohrung für die Aufnahme eines Blockierstifts auf. Durch den Längsstift sind flexible, aufeinander zu verbiegbare Schenkel gebildet, die eine Verschiebung des Rastkopfes innerhalb der Rastzahnung und damit die gewünschten Einstellungen erleichtern. Vorteilhaft weist der Zapfen im Querschnitt eine Rundung oder Keilspitze auf, die das Einschieben in die Nutöffnung erleichtert.

Die genannte Verbindungsschraube kann z.B. kronenartig ausgebildet sein, so dass sie sich durch einen im Winkel zur Schraubenachse, ggf. durch eine Öffnung im Verbindungsstück hindurchgeführten, Kegelkopf eines Werkzeugs drehen lässt.

Die Erfindung soll nun anhand von Ausführungsbeispielen und der beiliegenden, sich auf diese Ausführungsbeispiele beziehenden Zeichnungen näher erläutert werden. Es zeigen:

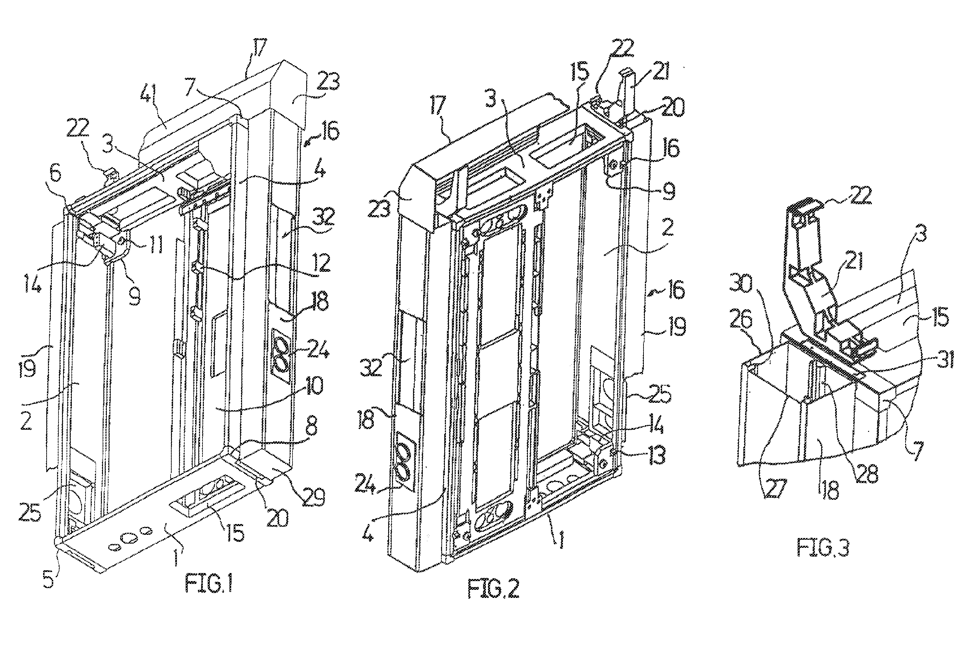

- Fig. 1: ein Ausführungsbeispiel für einen Zähler- und Verteilerschrank in einer perspektivischen Vorderansicht schräg von unten,
- Fig. 2: den Zähler- und Verteilerschrank von Fig. 1 in einer perspektivischen Rückansicht schräg von oben,
- Fig. 3: ein Detail des Zähler- und Verteilerschranks von Fig. 1 und 2,
- Fig. 4: ein zweites Ausführungsbeispiel für einen Zähler- und Verteilerschrank in einer perspektivischen Vorderansicht,
- Fig. 5: ein Detail des Zähler- und Verteilerschranks von Fig. 4,
- Fig. 6: einen Eckenausschnitt eines Zähler- und Verteilerschranks mit einer Haltevorrichtung gemäß der Erfindung,
- Fig. 7: ein in der Haltevorrichtung von Fig. 6 verwendetes Verbindungsstück in einer perspektivischen Seitenansicht,
- Fig. 8: einen Teil des Verbindungsstücks von Fig. 7 in einer perspektivischen Ansicht schräg von unten,
- Fig. 9: einen zum Einbau in den Zähler- und Verteilerschrank von Fig. 6 vorgesehenen Halteblock,
- Fig. 10: ein weiteres Ausführungsbeispiel für ein in einer Vorrichtung nach der Erfindung verwendbaren Verbindungsstücks in einer perspektivischen Teilansicht schräg von unten,
- Fig. 11: eine weitere Teilansicht des Verbindungsstücks von Fig. 10, das mittels einer Schraube an einem Zähler- und Verteilerschrank befestigt ist, und
- Fig. 12: ein drittes Ausführungsbeispiel für ein in einer Vorrichtung nach der Erfindung verwendbares Verbindungsstück.

Der in den Figuren gezeigte Zähler- und verteilerschrank weist Seitenwandteile 1 bis 4 auf, die über Eckenteile 5 bis 8 miteinander verbunden sind. Die Eckenteile bestehen aus Kunststoff. Bei den Seitenwandteilen handelt es sich um Blechteile.

Die Eckenteile 5 bis 8 sind an ihrem der Installationswand zugewandten Ende jeweils mit einem seitlich vorstehenden, plattenartigen Fußteil 9 versehen, das auf seiner der Installationswand abgewandten Seite mit einer Rückwand des Zähler- und Verteilerschrankes verbunden ist.

In dem gezeigten Ausführungsbeispiel ist die Rückwand zweiteilig mit einem ein Zählerfeld bildenden Plattformteil (nicht gezeigt) und einem damit formschlüssig verbindbaren, ein Verteilerfeld bildenden Plattformteil 10 ausgebildet.

Die Verbindung von Rückwand und Eckenteilen erfolgt mit Hilfe von den Fußteilen 9 vorstehender Zapfen 11, welche in entsprechende Öffnungen in der Rückwand bzw. den Plattformteilen eingreifen und dort unter Bildung einer unlösbaren Verbindung einrasten.

An den als Kunststoffspritzteile hergestellten Plattformteilen sind Anformungen zur Bildung von Sitzen oder/und Teilen von Schrankeinbauten gebildet, z.B. Trägertürme 12 für die Aufnahme von Hutprofilschienen.

Die Eckenteile 5 bis 8 weisen jeweils ein Hakenelement 13 für die Aufhängung des Schrankes an einer Wand auf. Das Hakenelement 13 ist durch eine Öffnung im Fußteil 9 geführt und mit einem Verstellmechanismus 14 verbunden, dessen Gehäuse an dem betreffenden Eckenteil befestigt ist.

Die Seitenwandteile 1 bis 4 aus Blech sind an ihren Längsseiten dreifach abgekantet, wobei durch zwei Abkantungen ein U-Profil und eine dritte Abkantung ein zum Türinnern vorstehender Steg gebildet ist. Durch die Stege aller Seitenwandteile entsteht ein umlaufender Falz für eine nicht gezeigte Schranktür.

Über die U-Profile sind die Seitenwandteile 1 bis 4 auf die Schenkel der als Winkelteile ausgebildeten Eckenteile 5 bis 8 aufgesteckt.

In allen Seitenwandteile 1 bis 4 ist wenigstens eine Öffnung 15 für die Durchführung von Kabeln vorgesehen, wobei in der oberen Seitenwandteil 3 zwei solcher Öffnungen 15 gebildet sind. Die Öffnungen sind durch Abdeckungen 25 aus Kunststoff verschließbar oder durch eine zwecks Kabeldurchführung durchstoßbare Membran (nicht gezeigt) abgedeckt.

Die Eckenteile 5 bis 7 weisen jeweils an ihrer Eckenaußenseite Sitze 20 für die Anbringung von Kabelkanälen auf. In dem gezeigten Ausführungsbeispiel erstreckt sich ein solcher Kabelkanal 16 über die gesamte Länge der oberen Seitenwand um die oberen Wandecken herum bis zum unteren Ende der rechten und linken Seitenwand des Schranks.

Auf der Schrankoberseite ist ein Teil 17 dieses Kanals 16 durch ein zur Installationswand und zum Schrank offenes Winkelteil 41 gebildet. Das Winkelteil 41 ist auf zwei gewinkelte Halter 21 aufsteckbar, welche mit Rastnasen 22 in entsprechende, nicht sichtbare Gegenstücke an der Innenseite des Winkelteils einrasten.

Kabelkanalteile 18 und 19 an der rechten und linken Seitenwand des Schranks weisen einen rechteckigen Querschnitt auf und sind durch ein U-Teil 26 und eine Abdeckung 27 gebildet, wobei sich die Abdeckung 27 über Randabwinklungen in Taschen 30 am U-Teil 26 einstecken lässt. Stirnwände 23 am Kanalteil 17 und Stirnwände 29 an den freien Enden der Kabelkanalteile 18 und 19 schließen den Kabelkanal 16 nach außen ab.

Die gewinkelten Halter 21 sowie die seitlichen Kabelkanalteile 18 und 19 sind an den Eckenteilen 5 bis 8 befestigt, welche Sitze 20 mit zueinander rechtwinkligen Sitzflächen und Bohrungen 31 für eine Verbindung mit den Kanaltellen, z.B. über Steckerstifte, aufweisen.

In den seitlichen Kabelkanalteilen 17 und 18 verläuft entlang der Bodenwand in Längsrichtung des Kanals eine Befestigungsschiene 28, an weicher Einbauten wie z.B. Stromverteilereinrichtungen befestigt werden können. In die seitlichen Kanalteile 18 und 19 sind z.B. bei 24 Mehrfachsteckdosen eingebaut, welche an der betreffenden Abdeckung 27 der Kanalteile 18,19 befestigt sind.

Aus den Öffnungen 15 in der Wandoberseite aus dem Schrank herausgeführte Kabel können in entgegengesetzten Richtungen entweder in den Kabelkanalteil 18 oder 19 hinein verlegt werden.

Es ist möglich, innerhalb der Kanalteile 18 und 19 an der Verteilerschiene Einbauten wie Verteilereinrichtungen, Sicherungseinrichtungen u. dgl. zu befestigen. Zugang zu Einbauten bietet eine Öffnung 32, welche durch einen abgetrennten Teil der Abdeckung 27 verschließbar ist.

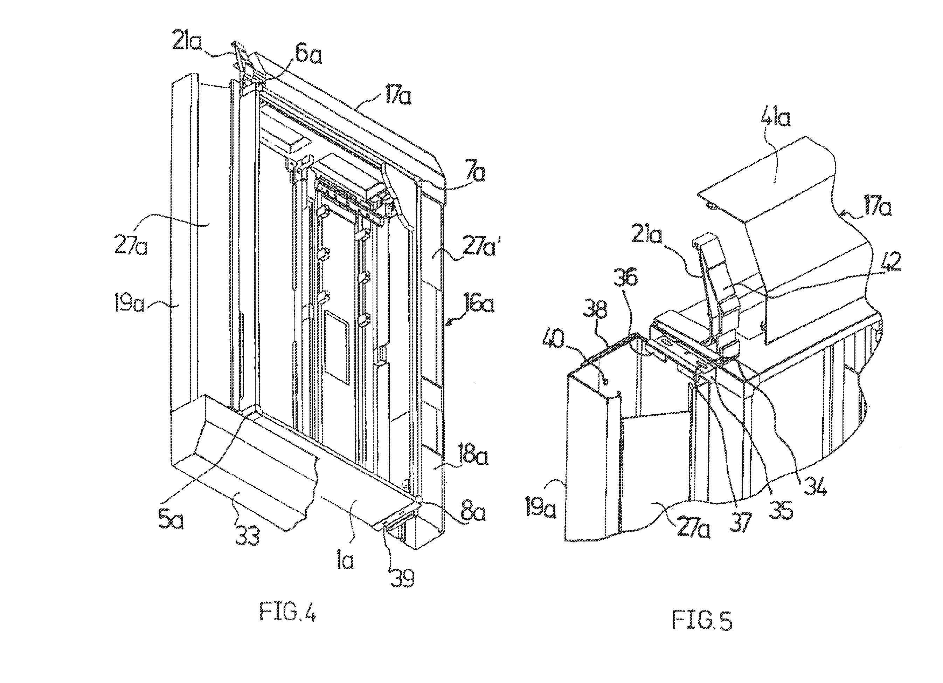

Es wird nun auf die Fig. 4 und 5 Bezug genommen, wo gleiche oder gleichwirkende Teile mit derselben Bezugszahi wie in den vorangehenden Figuren bezeichnet sind, wobei den betreffenden Bezugszahlen jeweils der Buchstabe a beigefügt ist.

Bei dem Ausführungsbeispiel von Fig. 4 und 5 ist neben Kanalteilen 17a, 18a und 19a ein weiterer, sich über die gesamte Länge eines unteren Seitenwandteils 1 a erstreckender Kanalteil 33 vorgesehen. Zur Erläuterung der Konstruktion sind die genannten Kanalteile mit Ausschnitten in Eckbereichen des Schranks dargestellt.

Der Kanalteil 19a weist eine Abdeckung 27a auf, welche zur Ebene der den Zähler-und Verteilerschrank aufnehmenden Trägerwand um 45° geneigt ist. Eine Abdeckung 27a' des Kanalteils 18a erstreckt sich parallel zur Trägerwand.

An Eckenteilen 5a bis 6a ist jeweils ein hakenförmiger Halter 21 a angebracht, welcher gegenüber dem Halter 21 des vorangehenden Ausführungsbeispiels um 180° gedreht ist.

An den Eckenteilen 5a bis 8a ist jeweils eine zur vertikalen Seite des Eckenteils öffnende Ausnehmung 34 gebildet, welcher der Aufnahme eines in dem betreffenden Ausführungsbeispiel quaderförmigen Verbindungsstücks 35 dient, an weichem zwei Krallen 36 und zwei Rastnasen 37 gebildet sind. Das hohl mit inneren Verstärkungsrippen oder als Block gebildete Verbindungsstück 35 lässt sich mit Hilfe der Krallen 36 am Endrand einer Wand des Kanalteils 19a anklemmen.

Das Bezugszeichen 38 weist auf ein gewinkeltes Verstärkungsblech hin.

In den Eckenteilen sind entsprechend den Rastnasen Rastöffnungen 39 vorgesehen, die in einem die Ausnehmung 34 begrenzenden, verhältnismäßig dünnen und daher nachgiebigen Abschnitt des betreffenden Eckenteils gebildet sind.

Das Bezugszeichen 40 weist auf Bohrungen hin, über welche der Kanalteil 27a zusätzlich an der Trägerwand für den Schrank befestigt werden kann. Entsprechende Bohrungen weist auch der Kanalteil 18a auf.

Zur Montage des Kabelkanals am Schrank werden die Verbindungsstücke 35 auf die Enden der Kanalteile 18a, 19a aufgesteckt und die Verbindungsstücke 35 in die Ausnehmungen 34 eingesteckt, wobei die Rastnasen 37 an dem Verbindungsstück 35 in die betreffenden Rastöffnungen 39 am Eckenteil einrasten.

Die Anbringung des gewinkelten Halters 21 a in der gezeigten Lage hat den Vorteil, während der Montage des Schrankes an einer Wand oberhalb des Schranks aus der Wand herausgeführte Kabel vorübergehend seitlich über den oberen Schrankecken abhängen zu können, wo sie die Montagearbeiten nicht stören. Nach oben vorstehende Halteschenkel 42 der gewinkelten Halter 21a verhindern dann ein Abrutschen der Kabel über die Schrankecken nach vom. Darüber hinaus beeinträchtigt der Halter in dieser Anordnung nicht den zur Verlegung von Kabeln verfügbaren Querschnitt.

Die Halter 21a in der gezeigten Anordnung können vorteilhaft auch unabhängig von der hier beschriebenen Erfindungslösung eingesetzt werden, nämlich in konventionellen Schränken, bei denen den Winkelteilen 41 entsprechende Teile lediglich zur Abdeckung von der Schrankoberseite aus dem Schrank in die Wand geführter Kabel dienen.

Vorteilhaft bilden die Ausnehmungen 34 beim Transport des Schrankes nutzbare Griffe.

Zur Stabilisierung ließe sich der gewinkelte Halter 21 a mit einer bis zur Trägerwand geführten Verlängerung versehen, die gelenkig mit dem freien Ende des Halteschenkels verbunden ist und an der Trägerwand befestigt werden kann.

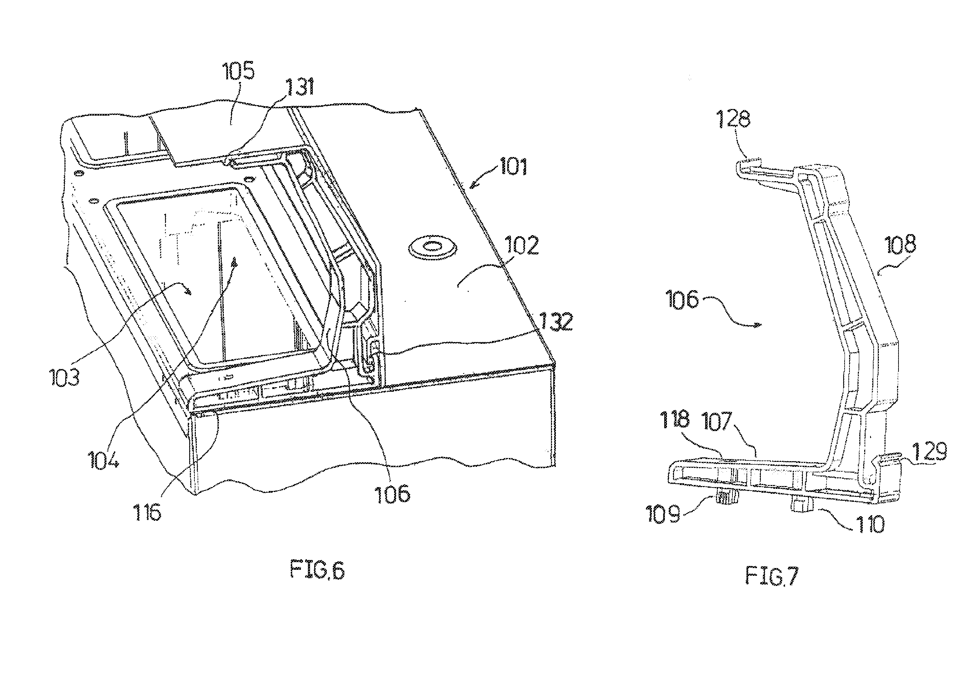

Eine horizontale Seitenwand 102 an der Oberseite eines in Fig. 6 gezeigten Zähler-und/oder Verteilerschranks 101 weist Öffnungen 103 für die Durchführung von Kabeln auf.

Die Öffnungen 103 münden in einen Kabelkanal 104, der durch ein sich über die gesamte Breite des Schranks erstreckendes Kunststoffwinkelprofil 105 gebildet ist. Eine den Kabelkanal 104 an dem gezeigten Ende verschließende Endkappe ist in Fig. 6 nicht gezeigt.

Der Verbindung des Kunststoffwinkelprofils 105 mit dem Schrank 101 dient ein Verbindungsstück 106. Das fachwerkartig ausgebildete, aus Kunststoff im Spritzgussverfahren hergestellte Verbindungsstück 106 ist winkelig mit einem geraden Schenkel 107 und einem gebogenen Schenkel 108 ausgebildet und weist am freien Ende des Schenkels 108 eine Rastnase 128 und am Verbindungsende der Schenkel 107,108 eine Rastnase 129 auf.

Von der Unterseite des Schenkels 107 stehen Zapfen 109 und 110 vor, von denen der Zapfen 110 einstückig mit einem unteren Teil 111 des Schenkels 107 verbunden ist. Dagegen ragt der Zapfen 109 durch eine quadratische Öffnung 113 in dem unteren Teil 111 hindurch und geht einstückig in einen oberen, mit dem unteren Teil 111 über Stege verbundenen Teil 112 des Schenkels 107 über.

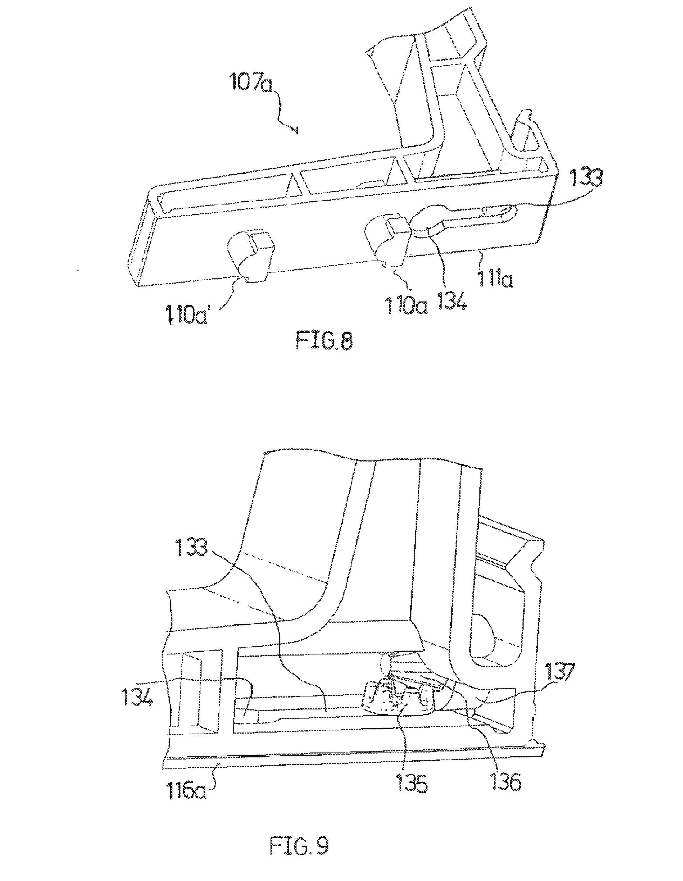

Wie Fig. 8 ferner erkennen lässt, weisen beide Zapfen 109,110 an einer Seite eine Rundung 114 auf. Durch Vorsprünge an zwei weiteren, einander gegenüberliegenden Seiten sind an jedem der Zapfen 109,110 Hinterschneidungen 115 gebildet, deren Höhe der Dicke einer zur Bildung der oberen Seitenwand 102 verwendeten Blechhaut 116 zuzüglich der Höhe einer durch Tiefziehen gebildeten Randabwinklung von (in den Figuren nicht sichtbaren) Langlöchern in der Blechhaut 116 entspricht.

Im Unterschied zu dem Zapfen 110 weist der Zapfen 109 zusätzlich einen Längsschlitz 117 auf, durch den zwei, elastisch verbiegbare Zapfenschenkel gebildet sind. Der durch den Längsschlitz 117 hälftig geteilte Zapfen 109 ist ferner mit einer zur Außenseite des Schenkelteils 112 öffnenden Durchgangsbohrung 119 versehen, welche der Aufnahme eines (nicht gezeigten) Blockierstifts dient. Am hinterschnittenen Ende des Zapfens 109 sind auf beiden Seiten Zähne 120 gebildet, wobei ein der geteilten Rundung 114 zugewandter erster Zahn eine zur Rundung hin verlängerte Flankenfläche 121 aufweist.

Die Zähne 1 20 sind zum Eingriff in eine Zahnung 122 vorgesehen, welche an einem in Fig. 9 gezeigten Halteblock 123 gebildet ist. Der Halteblock 123 wird über vorstehende Nasen 124 und 125 an einer (nicht gezeigten) Kunststoffinnenverkleidung des Schranks 101 befestigt.

Wie Fig. 9 zu entnehmen ist, weist die Zahnung 122 Zahnreihen an einander gegenüberliegenden Wänden einer einseitig zu einer Ausnehmung 127 offenen Nut 130 auf, wobei an der Öffnung der Nut zwei Schrägen 126 in zueinander keilartige Anordnung gebildet sind.

Zur Montage des Kabelkanals 104 sind zunächst Verbindungsstücke 106 an den Enden der oberen horizontalen Seitenwand 102 des Schranks 101 zu befestigen. Hierzu werden die Zapfen 109 und 110 jeweils in eine Aufweitung der obengenannten Langlöcher in der Blechhaut 116 der Seitenwand 102 eingeführt. Bei Vorschub der Verbindungsstücke 106 in Richtung zur Schrankrückwand hintergreifen die hinterschnittenen Enden der Zapfen 109,110 die Ränder der genannten Langlöcher. Der Zapfen 109 dringt, geführt durch die verlängerten Flankenflächen 121 und die Schrägen 126, in die einseitig offene Nut 130 ein, wo die Zähne 120 und in Zähnen der Rastung 122 einrasten. Während des Vorschubs, bei dem die Schenkel des Zapfens 109 aufeinander zu gebogen werden, bildet die Ausnehmung 127 eine Führung für den Zapfen 110.

Auf die nun durch Einrastung befestigten Verbindungsstücke 106 lässt sich das Kunststoffwinkelprofil 105 aufsetzen, wobei die Rastnasen 128 und 129 an entsprechenden Vorsprüngen 131 und 132 am Profil 105 einrasten. Das Profil 105 mit den daran befestigten Verbindungsstücken 106 lässt sich nun vorschieben, bis der der Montagewand zugewandte Rand des Profils 105 die Wandputzschicht erreicht. In einer entsprechenden Raststellung kann in die Durchgangsbohrung 119 ein Blockierstift eingeführt werden, der ein Zusammendrücken der Schenkel des Zapfens 109 und damit eine Lösung der Rastung verhindert.

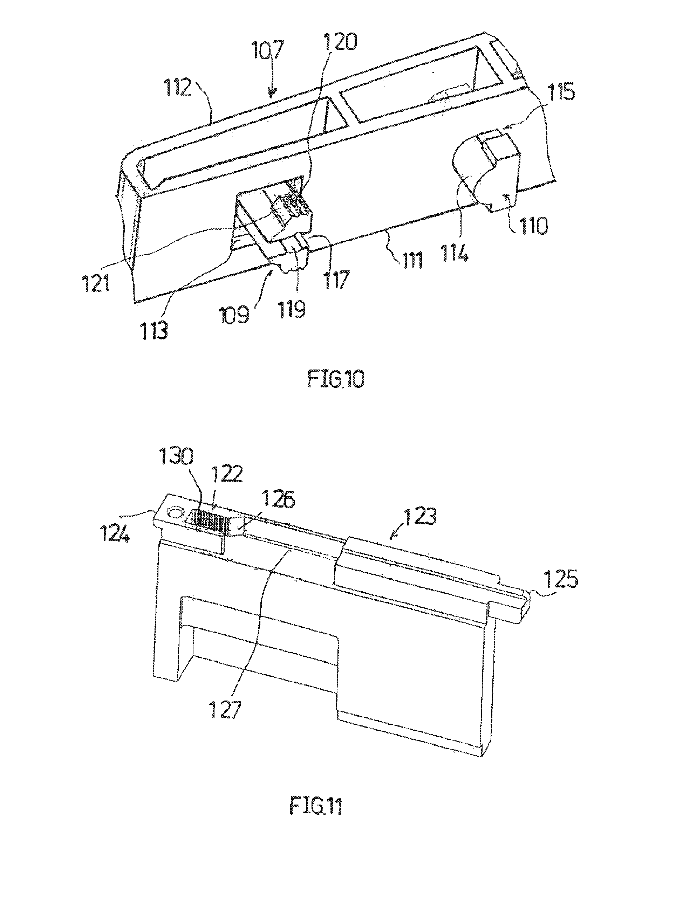

Bei dem Ausführungsbeispiel für ein Verbindungsstück gemäß den Fig. 10 und 11 sind zwei dem Zapfen 110 des vorangehenden Ausführungsbeispiels entsprechende Zapfen 110a und 110a' ohne Zähne vorgesehen. Ein weiterer Unterschied zu den vorangehenden Ausführungsbeispielen besteht in einem Langloch 133 mit einer Aufweitung 134, das in einem unteren Teil 111a eines Schenkels 107a gebildet ist.

Gemäß Fig. 11 ist durch das Langloch 133 hindurch eine Befestigungsschraube 135 geführt, deren Kopf kronenartig ausgebildet ist, so dass er sich durch das kegelförmige, gezahnte Ende eines im rechten Winkel zur Drehachse der Schraube 135 angeordneten Drehwerkzeugs 136 drehen lässt. Das Drehwerkzeug 136 ist durch eine Öffnung 137 in dem Verbindungsstück geführt, die unter Bildung einer Führung für das Werkzeug hülsenartig verlängert ist.

Die Schraube 135 greift in ein ggf. durch die Schraube selbst geschnittenes Gewinde in einer Blechhaut 116a des Schranks oder in einem hinter der Blechhaut angeordneten Gegenhalter ein.

Zur Montage des Verbindungsstücks am Schrank wird der Kopf der Schraube 135 zunächst durch die Aufweitung 134 geführt, dann seitlich in eine gewünschte Position im Langloch verschoben und durch das Werkzeug 136 arretiert. Bei der Drehung der Schraube 135 wird das Werkzeug 136 in der hülsenartig verlängerten Öffnung 137 geführt und im Eingriff mit der kronenartigen Zahnung des Schraubenkopfs gehalten.

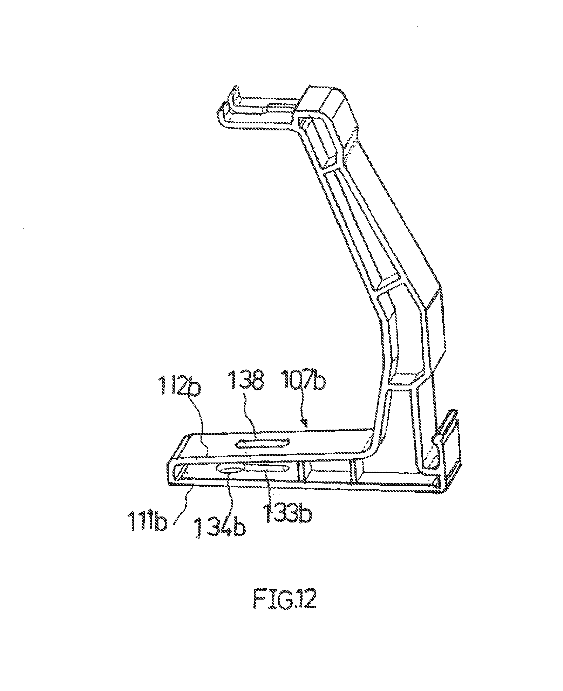

Bei dem Ausführungsbeispiel von Fig. 12 weist ein oberer Teil 112b eines Schenkels 107b eines Verbindungsstücks ein Langloch 138 auf, das zu einem Langloch 133b mit einer Aufweitung 134b im unteren Teil 111b des Schenkels 107b ausgerichtet ist. Durch das Langloch 138 hindurch lässt sich eine (nicht gezeigte) Befestigungsschraube in einer gewünschten Steilung innerhalb des Langlochs festziehen.

## Patentansprüche

1. Haltevorrichtung für einen Außenanbau (105) an einem Zähler- und/oder Verteilerschrank (101), insbesondere für einen Anbau zur Bildung eines Kabelkanals (104), mit Einrichtungen zur Befestigung des Außenanbaus (105) an einer Schrankseitenwand (102),
**dadurch gekennzeichnet,**
**dass** die Befestigungseinrichtungen zur Anbringung des Außenanbaus (105) an der Schrankseitenwand (102) in unterschiedlichen Abständen zur Schrankrückwand vorgesehen sind.

2. Haltevorrichtung nach Anspruch 1,
**dadurch gekennzeichnet,**
**dass** die Abstände zur Schrankrückwand kontinuierlich oder in Stufen einstellbar sind.

3. Haltevorrichtung nach Anspruch 1 oder 2,
**dadurch gekennzeichnet,**
**dass** die Befestigungseinrichtungen Rast- oder/und Schraubverbindungseinrichtungen aufweisen und die unterschiedlichen Abstände unterschiedlichen Positionen einer Rastnase (120) in einer Rastzahnung (122) oder unterschiedlichen Positionen einer Verbindungsschraube (135) in einem Langloch (133) entsprechen.

4. Haltevorrichtung nach einem der Ansprüche 1 bis 3,
**dadurch gekennzeichnet,**
**dass** die Befestigungseinrichtungen ein in unterschiedlichen Positionen an dem Schrank (101) oder dem Außenanbau (105) anbringbares, vorzugsweise separates, Verbindungsstück (106) umfassen.

5. Haltevorrichtung nach Anspruch 4,
**dadurch gekennzeichnet,**
**dass** das Verbindungsstück (106) als Winkel ausgebildet, wobei ein Winkelschenkel (107) mit dem Schrank (101) und der andere Winkelschenkel (108) mit dem Außenanbau (105) verbindbar oder verbunden ist.

6. Haltevorrichtung nach Anspruch 5.
**dadurch gekennzeichnet,**
**dass** ein von dem einen Verbindungsstück (106) vorstehender Zapfen (109,110) in eine Öffnung in der Schrankseitenwand (102) eingreift.

7. Haltevorrichtung nach Anspruch 5 oder 6,
**dadurch gekennzeichnet,**
**dass** die Öffnung als Langloch ausgebildet ist und eine Aufweitung aufweist, in welche sich ein hinterschnittener Kopf des Zapfens (109,110) einführen lässt.

8. Haltevorrichtung nach Anspruch 7,
**dadurch gekennzeichnet,**
**dass** der hinterschnittene Kopf an der Rastzahnung (122) einrastende Nasen (120) aufweist.

9. Haltevorrichtung nach einem der Ansprüche 3 bis 8,
**dadurch gekennzeichnet,**
**dass** die Rastzahnung (122) an einem im Inneren des Schranks (101) angeordneten Halteblock (123) gebildet ist.

10. Haltevorrichtung nach einem der Ansprüche 3 bis 9,
**dadurch gekennzeichnet,**
**dass** die Rastzahnung (122) einander gegenüberliegende Zahnreihen, vorzugsweise eine Nut (130) mit den Zahnreihen an einander gegenüberliegenden Nutenwänden, umfasst.

11. Haltevorrichtung nach einem der Ansprüche 3 bis 10,
**dadurch gekennzeichnet,**
**dass** Einrichtungen (119) zur Blockierung der Rastnase (120) in der Rastzahnung (122) vorgesehen sind.

12. Haltevorrichtung nach einem der Ansprüche 6 bis 11,
**dadurch gekennzeichnet,**
**dass** der Zapfen (109) einen Längsschlitz (117) und ggf. eine Längsbohrung (119) für die Aufnahme eines Blockierstifts aufweist.

13. Haltevorrichtung nach einem der Ansprüche 6 bis 12,
**dadurch gekennzeichnet,**
**dass** der Zapfen (109,110) im Querschnitt eine Rundung (114) oder einen keilförmigen Ansatz aufweist.

14. Haltevorrichtung nach einem der Ansprüche 3 bis 13,
**dadurch gekennzeichnet,**
**dass** die Verbindungsschraube (135) einen kronenartig ausgebildeten Kopf aufweist, der durch einen im Winkel zur Schraubenachse durch eine Öffnung (137) im Verbindungsstück hindurch geführtes, einen gezahnten Kegelkopf aufweisendes Werkzeug (136) drehbar ist.
